Europäisches Patentamt

(19) European Patent Office

Office européen des brevets

(11) Publication number: **0 024 097**

B1

(12) **EUROPEAN PATENT SPECIFICATION**

(45) Date of publication of patent specification: **15.02.84**

(51) Int. Cl.³: **B 01 J 19/18** //B04B5/00

(21) Application number: **80301724.3**

(22) Date of filing: **23.05.80**

(54) **Apparatus and process for treating a fluid material while it is subjected to a centrifugal force.**

(30) Priority: **01.06.79 GB 7919250**

(43) Date of publication of application:
**25.02.81 Bulletin 81/8**

(45) Publication of the grant of the patent:
**15.02.84 Bulletin 84/7**

(84) Designated Contracting States:
**AT BE CH DE FR GB IT LI NL SE**

(56) References cited:
**DE - A - 2 017 351
DE - A - 2 336 591
DE - A - 2 810 306
DE - C - 387 807
DE - C - 444 062
FR - A - 1 220 388
US - A - 2 209 577**

(73) Proprietor: **IMPERIAL CHEMICAL INDUSTRIES PLC**
**Imperial Chemical House Millbank**
**London SW1P 3JF (GB)**

(72) Inventor: **Steel, Margaret Lilian**
**21 Bunbury Drive**
**Runcorn Cheshire (GB)**
Inventor: **Norton-Berry, Philip**
**Tan-y-Coed**
**Llandegla Clwyd Wales (GB)**

(74) Representative: **Bate, Bernard James et al,**
**Imperial Chemical Industries PLC Legal**
**Department: Patents PO Box 6**
**Welwyn Garden City Herts, AL7 1HD (GB)**

Courier Press, Leamington Spa, England.

## Apparatus and process for treating a fluid material while it is subjected to a centrifugal force

This invention relates to a process for treating a fluid material while it is subjected to a centrifugal force, and in particular to the treatment of the fluid material with a fluid. The invention also relates to apparatus for carrying out the process.

A process is described in DE—C—387807 for washing solid residues deposited in a fully jacketed centrifuge. This uses a hollow member rotating about an axis and having an inner surface of rotation, such surface being provided with a permeable element. The hollow member is in the form of a drum with a central opening at one end, i.e. like a cup with an inward facing radial flange instead of a rim at the open end, with its sides providing the permeable filter element. This is arranged inside a concentric non-permeable jacket which rotates with it, and after the solid material has been deposited in the drum, where it is retained by the inwardly extending flange, it is washed by washing liquid pumped inwards through the chamber formed between the permeable sides of the drum and the surrounding jacket.

According to one aspect of the present invention, there is provided a process for treating a fluid material in a hollow member rotating about an axis and having an inner surface of rotation, such surface being provided with a permeable element, characterised in that the hollow member is in the form of a cup having a base and a rim interconnected by sides formed of the permeable element whose inner surface thus provides the surface of rotation, the process comprising feeding the fluid material to the base of the cup as it rotates, thereby causing the fluid material to climb up the sides of the cup towards the rim, whilst simultaneously impelling a fluid inwards through the permeable element to contact the fluid material on the inner surface thereof, and expelling the product from the rim.

By "fluid material" we mean a liquid or a free-flowing solid, e.g. powder. The fluid material should be capable of moving over a surface of the permeable element or through at least a portion of the pores thereof when the permeable element is rotating. The extent and speed of such movement being governed *inter alia* by the viscosity and density of the fluid material and the surface tension and surface friction between the fluid material and the permeable element. When the fluid material is a liquid it may, for example, be a neat liquid, a mixture of miscible or immiscible liquids, a solution of one or more solids or gases in a liquid or a foam or a dispersion or colloid or slurry of one or more solids in a liquid. Within the term solid we include biological material, e.g. living and dead cells, which cells may include those derived from plants, animals, bacteria or fungi.

By "fluid" we mean a substance or a mixture of substances, which is a gas or a liquid. For example, where the fluid is a gas it may be one gas or a mixture of gases, where the fluid is a liquid it may be a neat liquid or a solution of one or more solutes in a liquid, which solute may be a gas, liquid or solid.

The product expelled from the rim may be in the same physical phase as or a different physical phase from the physical phase or phases of the fluid material. For example, where the fluid material is a powder the product may be a solution, where the fluid material is a slurry the product may be a powder, where the fluid material is a solution the product may be a slurry. However often there is no change in phase.

The process according to the present invention may, for example, be one of absorption, desorption, extraction, distillation, homogenisation, or a catalytic process in a chemical or biochemical reaction.

The permeable element has an axis of symmetry which is co-incident with the axis of rotation, e.g. the permeable element has a circular or annular cross-section. For example, the shape of the permeable element is typically cylindrical, or conical. Where the fluid material is a thick slurry a cone-shaped permeable element is often preferred. Typical structures of permeable elements include *inter alia* foraminate, cribreform, perforated, orificiated and gauze-like structures.

In many reaction systems where intimate contact of a fluid material, e.g. a solid or liquid, with a fluid, e.g. a gas, is required, vigorous pumping or churning is employed sometimes causing damage to delicate or fragile bodies, e.g. cells present in the fluid material. Apparatus in which the fluid material flows over the surface of the permeable element provides gentle handling of a thin layer of a fluid material whilst a fluid, e.g. a gas, is passed through or is in contact with the said layer.

Accordingly a second aspect of the invention provides apparatus for treating a fluid material with a fluid, which apparatus comprises a hollow member mounted in a container to define a pressure chamber therebetween, the hollow member being rotatable about an axis and having an inner surface of rotation which is provided with a permeable element, characterised in that the hollow member is in the form of a cup having a base and a rim (11) interconnected by sides (10, 23) formed of the permeable element whose inner surface thus provides the surface of rotation, the apparatus having a first feed tube (19, 29) positioned for feeding the fluid material to the base of the cup as it rotates, and a second feed tube (17, 28) to the container to enable fluid simultaneously to be pumped into the pressure chamber and thence through the permeable element to treat the fluid material.

The permeable element may be homogeneous or it may be a laminate of at least two permeable elements having different properties, for example, different permeabilities, wettabilities or activities. Where the permeable element is a laminate it may, for example, comprise a radially inner and a radially outer layer which may, for example, have different porosities, and/or wettabilities, e.g. a wire mesh in the shape of a rod may be co-axially mounted in a random mat of polytetrafluoroethylene fibres in the shape of a tube, and/or interact and do not interact with the fluid material, e.g. a tube formed from segments of metallic skeleton foam may be packed with glass beads on which a catalyst is supported. Moreover, where the outer layer is mechanically self-supporting, e.g. a perforated tube, it may support an inner layer which is not self-supporting, e.g. a catalyst bed. It is often preferred that the permeable elements of such a laminate are arranged with the radially inner of the too permeable elements adapted to allow flow of the fluid material through at least a portion of the pores thereof, the said flow having at least an axial component, and the radially outer of the said elements adapted to allow a fluid to flow at least radially inwardly through at least a portion of the pores thereof to contact the fluid material.

The depth of fluid material adjacent the outer surface of the permeable element will depend *inter alia* on the viscosity and rate of charging of the fluid material and on the porosity, the speed of rotation, and the diameter of the permeable element. For any particular set of operating conditions the depth of the fluid material will decrease as the rotational speed of the permeable element is increased. The container and the permeable element define a chamber, of annular cross-section, for example, adapted to be pressurised with a fluid to a pressure at least as high as the pressure of the fluid material at the radially outer perimeter of the permeable element. By choice of a suitable fluid pressure, rotational speed, permeable element, fluid material, the fluid may initially contact the fluid material on the surface of the permeable element and/or in the pores thereof.

Depending *inter alia* on the relative densities of the fluid and the fluid material and on their miscibility in each other, the fluid and the fluid material may be transported in intimate contact along substantially the length of the permeable element; they may be transported along substantially the length of the permeable element in parallel layers; or, where the fluid has a lower density than the fluid material it may be impelled right through the fluid material.

Conveniently apparatus according to the present invention is provided with a stationary fluid-collecting means, e.g. a housing, which surrounds at least the rim in which fluid-collecting means the fluid material or a component or derivative thereof which is expelled from the rim may be collected.

The residence time of the fluid material in and/or on the permeable element is a function of the dimensions of the permeable element, the nature and permeability of the permeable element, the rotational speed, and the flow rate of the fluid material. These parameters interact with each other and affect the residence time. For example, where the length of the permeable element is increased and the other parameters kept constant the residence time is increased; where the flow rate is increased and the other parameters kept constant the residence time is reduced; where the rotational speed is increased and the other parameters kept constant the residence time is reduced. The speed of rotation of the permeable element is prepared such that the fluid material or a component or derivative thereof is subjected to an acceleration of at least 150 m sec$^{-2}$ preferably at least 1000 m sec$^{-2}$ and more preferably at least 10000 m sec$^{-2}$ adjacent the rim where the fluid material or a component or derivative thereof is discharged from the permeable element. A typical speed of rotation for a tube of 10 cms diameter is 500—5000 rpm, and for a tube of 1 metre diameter, 100—1000 rpm may be more suitable.

In general, the speed of rotation of the permeable element will be in the range 500 rpm to 10,000 rpm, preferably in the range 1000 rpm to 5000 rpm.

While the axis about which the permeable element is rotated may be horizontal or vertical or at any angle between, it is often convenient to have the axis horizontal. Typically rotary movement is applied to it by an axial shaft projecting from the base of the bowl.

The materials and the structure of the permeable element may be chosen with regard to the nature of the fluid treatment occurring. For example, where a reaction is endothermic the permeable element may be provided with heating means, e.g. electrical resistance wires or inductive heating, whereas for exothermic reactions, cooling means, e.g. a cooling coil, may be provided, and where distillation is to be effected the rotatable member may be provided with insulating means, e.g. a layer of glass fibre.

Absorption processes which may be effected in apparatus according to the present invention may be physical e.g. absorption of ammonia, nitrogen oxides, or hydrogen chloride in water, or ammonia in brine, or nitrogen oxides in nitric acid; or they may involve a chemical reaction, e.g. absorption of sulphur dioxide in milk of lime to form calcium bisulphite; absorption of oxygen/air mixtures for oxidation of hydrocarbons e.g. cumene, cyclohexane or xylene; absorption of sulphur trioxide for the sulphonation of organic compounds, particularly $C_{10}$—$C_{20}$ $\alpha$-olefins; absorption of chlorine or bromine for the chlorination and bromination of paraffins and olefins; absorption of chlorine in caustic soda solution for the preparation of hypochlorite; absorption of e.g. air, oxygen, into biological materials, for example those containing cells (whether alive or dead) derived from living matter.

Desorption processes which may be effected in the apparatus according to the present invention include *inter alia* removal of a reaction by-product, e.g. ethylene glycol from a polymerising melt of polyethylene terephthalate "monomer"; deodorisation of natural oils and fats, e.g. cotton seed oil, soyabean oil, corn oil, lard, by treating the oils or fats with steam; volatilisation of organic material from aqueous solution, e.g. removal of acetone from water by air; and, removal of ammonia and carbon dioxide from brine. Often such desorption processes are effected reduced pressure, typically the reduced pressure is between 1 mm and 10 mm of mercury.

Absorption and desorption may occur concurrently, e.g. oxygen at high pressure may be impelled through the outer surface of a tubular permeable element in which a biological "soup" is flowing whilst carbon dioxide is expelled from the inner surface of the permeable element.

Extractions which may be effected in apparatus according to the present invention include *inter alia* extraction of benzene, toluene and xylene from naphtha using diethylene glycol as extractant; dehydration of aqueous hydrogen fluoride and aqueous hydrogen chloride with oleum; extraction of formic acid and acetic acid from the so-called black liquors of the cellulose industry with methyl ethyl ketone.

Distillations which may be effected in apparatus according to the present invention include *inter alia* separation of ethyl benzene from xylene, separation of $C_2$ hydrocarbons (ethylene from ethane), separation of $C_3$ hydrocarbons (propylene from propane), separation of aromatics, separation of mono-, di- and tri-methylamines and ethylamines, isopentane separation from light naphtha and propylene oxide/water separation.

Where distillation is effected in apparatus according to the present invention it will be appreciated that liquefying means, e.g. a condenser, is required to liquefy the vapour discharged from the permeable element and that vaporising means e.g. a boiler, is required to vaporise a liquid, the vapour of which is to be charged to the permeable element.

Reactions which may be effected in apparatus according to the present invention are typically those requiring a large volume of gas to be in contact with a fluid material. For example, the apparatus will transport a liquid through the pores of the permeable element and/or over the surface of the permeable element whilst allowing fluid from the pressurised chamber to permeate the liquid during the transport until the liquid reaches the discharge zone conveniently at the rim of the permeable element. We have found, for example, that biological materials, for example those containing cells (whether alive or dead) derived from living matter may be transported over the surface or through the pores of the permeable element and a plentiful supply of a gas such as air, oxygen, carbon dioxide etc. as may be desired, may be maintained in contact with the biological material. The aforesaid supply of gas is preferably provided from a container in which the permeable element is mounted.

Where a reaction with or on biological material is effected in apparatus according to the present invention choice of a suitable permeable element allows treatment of "soups" and sludges and the apparatus may be used to conduct chemical reactions with or in the biological material, for example a reaction with a living cell and an enzyme or a reaction involving bacteria. Another example of a reaction usefully carried out in apparatus according to the present invention is a fermentation reaction especially fermentation of biological cultures which require efficient aerations. Thus apparatus according to the present invention may be used as an apparatus in which a range of microorganisms may be handled having at least many of the necessary performance characteristics described in Chemostat-design and Instrumentation, D Herbert et al., published by United Trade Press Ltd, in "Laboratory Practice" October 1965, p. 1150.

The invention will be further described by reference to the accompanying drawings which show, by way of example only, embodiments of apparatus according to the present invention.

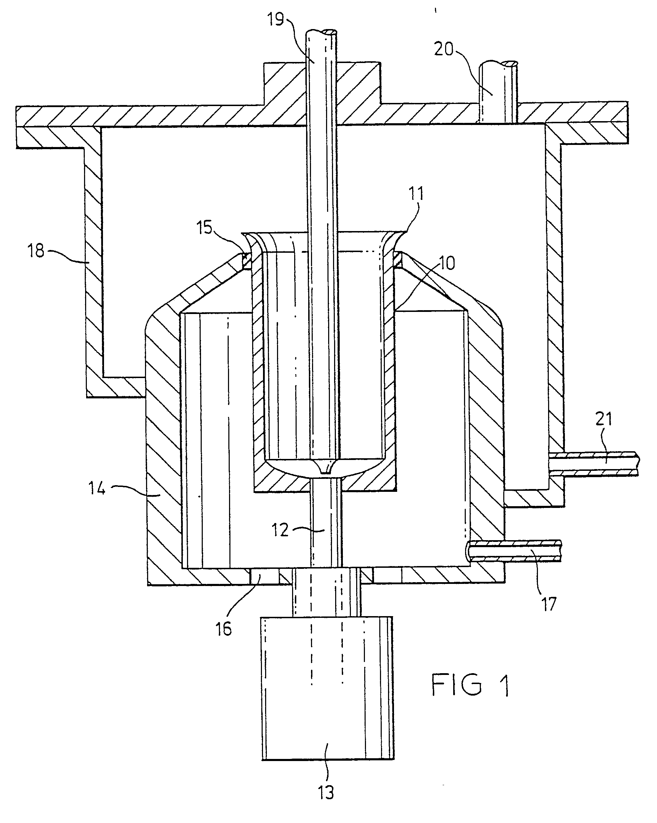

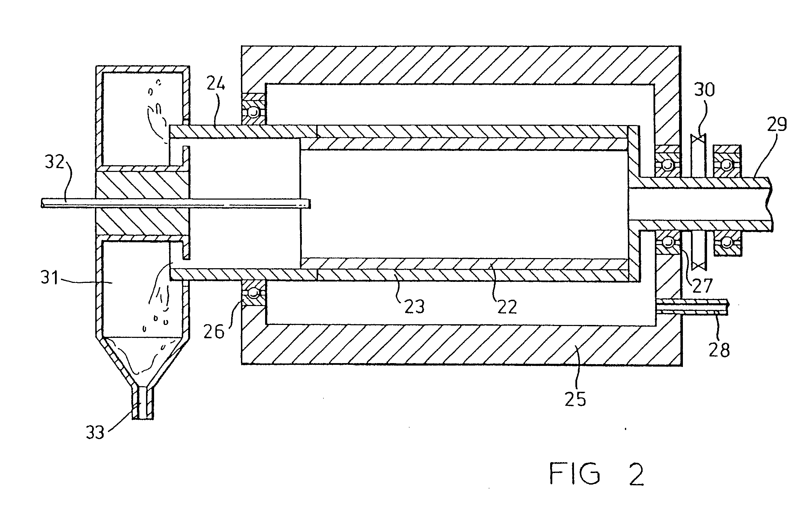

In the drawings, Figures 1 and 2 are diagrammatic representation partly in cross-section of reactors.

In Figure 1, a permeable element in the form of a stainless steel cup 10 having perforated walls of half-angle 5° and a flanged rim 11 is connected to the vertical drive shaft 12 of an electric motor 13. The cup 10 is mounted in a cylindrical container 14 by combined bearing/seals 15, 16 which container with the cup defines a chamber into which a fluid can be pumped via tube 17. The cylindrical container 14 is mounted in a cylindrical housing 18 which is provided with a feed tube 19 for fluid material and exit tubes 20, 21.

In operation a fluid material is fed via tube 19 and contacts the cup 10 rotating at high speed, for example 1000—5000 rpm. The fluid material spreads as a thin film over the base of the cup. As additional fluid material is fed to the cup, the fluid material climbs up the sides of the bowl as a uniform thin film until it reaches the rim 11. Simultaneously a fluid is fed through pipe 17 and when it reaches a sufficient pressure in the aforesaid chamber it is impelled through the perforations in the cup 10 to contact the fluid material on the inner surface thereof. The centrifugal force which moves the fluid material up the surface of the cup causes the product to be expelled from the rim 5, and it is collected in housing 18. The product may be run off via tube 21 and, where the fluid is a gas, excess gas may be vented via tube 20.

In Figure 2 a laminate permeable element comprising an inner layer 22, e.g. Cambrelle (registered trade mark) and an outer layer 23 which is e.g. a perforated portion of a steel tube 24 is rotatably mounted in a housing 25 at bearings 26 and 27. The permeable element and the housing 25 define a chamber adapted to be filled with a fluid via pipe 28. One end of the tube 24 narrows to a tube 29 through which a fluid material can be fed to the apparatus and which is driven by a rotary drive to a pulley 30. The other end of the tube 24 is rotatably supported in a stationary collector 31 which is provided with a fluid discharge tube 31 and a discharge pore for fluid material 33.

In operation the tube 29 is rotated, a fluid material is fed through it to the inner layer of the permeable element and simultaneously a fluid, e.g. a gas, is fed into the aforesaid chamber via pipe 28 from where it is forced through the perforation in the tube 23 to contact the fluid material. The product flows through the inner layer 22 and is discharged from the end of the tube 24 to be collected in collector 31. A gaseous by-product can be vented via pipe 32.

The invention is illustrated by the following examples in which parts and percentages are by weight unless otherwise stated.

### Example 1

Benzoic acid in the form of a finely powdered solid was introduced as a continuous stream of particles into a stainless steel cup having a perforated wall in an apparatus shown diagrammatically in Figure 1. The cup was rotated at high speed (ca. 4000 rpm) the powder, under the influence of centrifugal force, moved rapidly as a thin layer of material over the surface of the cup and was expelled from the rim and collected in housing 18. Ammonia gas was fed into the apparatus via (17) and forced through the perforated wall of the cup to contact the benzoic acid. An exothermic reaction occurred and ammonium benzoate was formed almost quantitatively before the power reached the rim. The ammonium benzoate was a noticeably finer powder than the benzoic acid. The product was confirmed to be pure ammonium benzoate by IR and NMR spectroscopy.

### Example 2

A solution of 88% w/w orthophosphoric acid in water was introduced into the reactor shown in Figure 2 at a rate of 20 ml/min whilst the tube was rotated at 2600 rpm. Anhydrous ammonia was charged to the housing and forced under pressure into the pores of the permeable element where a portion of it reacted with the orthophosphoric acid. Unreacted ammonia gas was vented via a lute. The product was discharged from the tube and run into a collector. The product was found by analysis (X-ray diffraction, NMR spectroscopy and titration) to consist mainly of a melt of mono ammonium orthophosphate.

## Claims

1. A process for treating a fluid material in a hollow member rotating about an axis and having an inner surface of rotation, such surface being provided with a permeable element, characterised in that the hollow member is in the form of a cup having a base and a rim (11) interconnected by sides (10, 23) formed of the permeable element whose inner surface thus provides the surfaces of rotation, the process comprising feeding the fluid material to the base of the cup as it rotates, thereby causing the fluid material to climb up the sides of the cup towards the rim, whilst simultaneously impelling a fluid inwards through the permeable element to contact the fluid material on the inner surface thereof, and expelling the product from the rim.

2. Apparatus for treating a fluid material, comprising a hollow member mounted in a container to define a pressure chamber therebetween, the hollow member being rotatable about an axis and having an inner surface of rotation which is provided with a permeable element, characterised in that the hollow member is in the form of a cup having a base and a rim (11) interconnected by sides (10, 23) formed of the permeable element whose inner surface thus provides the surface of rotation, the apparatus having a first feed tube (19, 29) positioned for feeding the fluid material to the base of the cup as it rotates, and a second feed tube (17, 28) to the container to enable fluid simultaneously to be pumped into the pressure chamber and hence through the permeable element to treat the fluid material.

3. Apparatus as claimed in claim 2 in which the permeable element is homogeneous.

4. Apparatus as claimed in claim 2 in which the permeable element is a laminate of at least two permeable elements having different properties.

5. Apparatus as claimed in claim 4 in which the radially inner of the two permeable elements is adapted to allow flow of the fluid material through at least a portion of the pores thereof, the said flow having at least an axial component and the radially outer of the said element is adapted to allow a fluid to flow at least radially inwardly through at least a portion of the pores thereof to contact the fluid material.

6. Apparatus as claimed in any one of claims 2 to 5 in which a stationary housing (18, 31) surrounds at least the rim (11) for collecting the product as it is expelled from the rim.

7. Apparatus as claimed in any one of claims 2 to 6 in which the permeable element is provided with heating means.

8. Apparatus as claimed in any one of claims 2 to 6 in which the cup (10, 23) is rotatably mounted within the container (14, 25) by bearing (15, 16, 26, 27).

## Revendications

1. Procédé de traitement d'une matière fluide dans un élément creux tournant sur un axe et ayant une surface interne de rotation, cette surface étant munie d'un élément perméable, caractérisé en ce que l'élément creux se présente sous la forme d'une coupelle ayant une base et un rebord (11) reliés entre eux par des côtés (10, 23) formés de l'élément perméable dont la surface interne constitue ainsi la surface de rotation, le procédé consistant à charger la matière fluide sur la base de la coupelle pendant qu'elle tourne, de manière que la matière fluide s'élève le long des côtés de la coupelle vers le rebord, pendant qu'un fluide est propulsé simultanément vers l'intérieur à travers l'élément perméable afin d'entrer en contact avec la matière fluide sur la surface interne de cet élément, et à expulser le produit du rebord.

2. Appareil de traitement d'une matière fluide, comprenant un élément creux monté dans un récipient de manière qu'une chambre sous pression soit définie entre eux, l'élément creux pouvant tourner sur un axe et ayant une surface interne de rotation qui est munie d'un élément perméable, caractérisé en ce que l'élément creux se présente sous la forme d'une coupelle ayant une base et un rebord (11) reliés entre eux par des côtés (10, 23) formés de l'élément perméable dont la surface interne constitue ainsi la surface de rotation, l'appareil comportant un premier tube (19, 29) de chargement disposé pour charger la matière fluide sur la base de la coupelle pendant qu'elle tourne, et un second tube (17, 28) de chargement relié au récipient afin de permettre au fluide d'être refoulé simultanément dans la chambre de pression et donc à travers l'élément perméable pour traiter la matière fluide.

3. Appareil selon la revendication 2, dans lequel l'élément perméable est homogène.

4. Appareil selon la revendication 2, dans lequel l'élément perméable est un stratifié d'au moins deux éléments perméables ayant des propriétés différentes.

5. Appareil selon la revendication 4, dans lequel celui des deux éléments perméables qui est situé radialement à l'intérieur est conçu pour permettre un écoulement de la matière fluide à travers au moins une partie de ses pores, ledit écoulement ayant au moins une composante axiale, et celui desdits éléments qui est situé radialement à l'extérieur est conçu pour permettre à un fluide de s'écouler au moins radialement vers l'intérieur à travers au moins une partie de ses pores pour entrer en contact avec la matière fluide.

6. Appareil selon l'une quelconque des revendications 2 à 5, dans lequel un boîtier fixe (18, 31) entoure au moins le rebord (11) afin de collecter le produit lorsqu'il est expulsé de rebord.

7. Appareil selon l'une quelconque des revendications 2 à 6, dans lequel l'élément perméable est équipé de moyens chauffants.

8. Appareil selon l'une quelconque des revendications 2 à 6, dans lequel la coupelle (10, 23) est montée de façon à pouvoir tourner à l'intérieur du récipient (14, 25) à l'aide de paliers (15, 16, 26, 27).

## Patentansprüche

1. Verfahren zur Behandlung eines Fluidmaterials in einem Hohlteil, das sich um eine Achse dreht und eine innere Rotationsfläche aufweist, wobei diese Fläche mit einem durchlässigen Bauteil versehen ist, dadurch gekennzeichnet, daß das Hohlteil in Form eines Topfes mit einem Boden und einem Rand (11) vorliegt, die miteinander durch Seiten (10, 23), die aus dem durchlässigen Bauteil gebildet sind, dessen Innenfläche dementsprechend die Rotationsfläche liefert, verbunden sind, wobei das Fluidmaterial bei dem Verfahren dem Boden des Topfes zugeführt wird, während sich der Topf dreht, wodurch veranlaßt wird, daß das Fluidmaterial an den Seiten des Topfes in Richtung auf den Rand hinaufsteigt, während gleichzeitig ein Fluid durch das durchlässige Bauteil hindurch innen getrieben wird, um an dessen Innenfläche mit dem Fluidmaterial in Berührung zu kommen, und das Produkt von dem Rand her hinausgeschleudert wird.

2. Vorrichtung zur Behandlung eines Fluidmaterials, die ein Hohlteil, das so in einem Behälter eingebaut ist, daß dazwischen eine Druckkammer abgegrenzt wird, aufweist, wobei das Hohlteil um eine Achse herum drehbar ist und eine innere Rotationsfläche aufweist, die mit einem durchlässigen Bauteil versehen ist, dadurch gekennzeichnet, daß das Hohlteil in Form eines Topfes mit einem Boden und einem Rand (11) vorliegt, die miteinander durch Seiten (10, 23), die aus dem durchlässigen Bauteil gebildet sind, dessen Innenfläche dementsprechend die Rotationsfläche liefert, verbunden sind, wobei die Vorrichtung ein erstes Zuführungsrohr (19, 29), das für eine Zuführung des Fluidmaterials zu dem Boden des Topfes während dessen Drehung eingestellt ist, und ein zweites Zuführungsrohr (17, 28) zu dem Behälter, das ermöglicht, daß ein Fluid gleichzeitig in die Druckkammer eingepumpt und von dort durch das durchlässige Bauteil hindurchgepumpt wird, um das Fluidmaterial zu behandeln, aufweist.

3. Vorrichtung nach Anspruch 2, bei der das durchlässige Bauteil homogen ist.

4. Vorrichtung nach Anspruch 2, bei der das durchlässige Bauteil ein Schichtstoff aus mindestens zwei durchlässigen Bauteilen mit verschiedenen Eigenschaften ist.

5. Vorrichtung nach Anspruch 4, bei der das radial innen befindliche der zwei durchlässigen Bauteile dafür bestimmt ist, eine Strömung des Fluidmaterials durch mindestens einen Teil seiner Poren zu ermöglichen, wobei diese Strömung mindestens eine axiale Komponente hat, und das radial außen befindliche dieser Bauteile dafür bestimmt ist, ein Fluid mindestens radial nach innen durch mindestens einen Teil seiner Poren strömen zu lassen, um mit dem Fluidmaterial in Berührung zu kommen.

6. Vorrichtung nach einem der Ansprüche 2 bis 5, bei der ein feststehendes Gehäuse (18, 31) mindestens den Rand (11) umgibt, um das Produkt zu sammeln bzw. aufzufangen, während es von dem Rand her hinausgeschleudert wird.

7. Vorrichtung nach einem der Ansprüche 2 bis 6, bei der das durchlässige Bauteil mit einer Heizeinrichtung ausgestattet ist.

8. Vorrichtung nach einem der Ansprüche 2 bis 6, bei der der Topf (10, 23) innerhalb des Behälters (14, 25) durch Lager (15, 16, 26, 27) drehbar angebracht ist.

FIG 1

1

FIG 2

0024097